# EUROPÄISCHE PATENTANMELDUNG

(11) **EP 3 598 096 A1**
(43) Veröffentlichungstag der Anmeldung: **22.01.2020**
(21) Anmeldenummer: 19179326.4
(22) Anmeldetag: 11.06.2019
(51) Int. Cl.: G01L 5/10

(54) **RIEMEN UND SYSTEM**

(30) Priorität: 19.07.2018 DE 102018212071
(71) Anmelder: ContiTech Antriebssysteme GmbH, 30165 Hannover (DE)
(72) Erfinder: Huber, Tobias, 30165 Hannover (DE); Lüker, Svenja, 30165 Hannover (DE)
(74) Vertreter: Finger, Karsten

(57) **Zusammenfassung**

Die Erfindung betrifft einen Riemen (2), aufweisend ein Basismaterial (4), insbesondere aus Gummimaterial oder Polyurethan, und eine Detektorvorrichtung (6), die in das Basismaterial (4) eingebettet ist, wobei die Detektorvorrichtung (6) eine Dehnungssensoreinheit (8) zur Erfassung einer Dehnung des Riemens (2) aufweist, wobei Festigkeitsträger (10) in das Basismaterial (4) eingebettet sind, wobei die Detektorvorrichtung (6) eine Funkeinheit (12) aufweist, die zum drahtlosen Empfang eines Energiesignals ausgebildet ist, wobei die Detektorvorrichtung (6) mit einer durch das Energiesignal empfangbaren elektrischen Energie betreibbar ausgebildet ist, und wobei die Funkeinheit (12) zum drahtlosen Senden eines Detektorsignals ausgebildet ist, das die erfasste Dehnung des Riemens (2) repräsentiert. Außerdem betrifft die Erfindung ein System (24) (24) mit einem derartigen Riemen (2).

## Beschreibung

Die Erfindung betrifft einen Riemen und ein System.

Riemen sind aus dem Stand der Technik bekannt. Riemen können zur Übertragung von Zugkräften und/oder zum Transport von Fördergut ausgebildet sein. Ein Riemen kann beispielsweise ein Riemen für ein Riemengetriebe, für einen Linearantrieb oder als ein Gurtband ausgebildet sein. Insbesondere wenn der Riemen für ein Riemengetriebe vorgesehen ist, kann der Riemen beispielsweise als ein Rippenriemen, ein Keilriemen oder ein Keilrippenriemen ausgebildet sein. Ist der Riemen hingegen als ein Gurtband ausgebildet, so kann der Riemen nach Art eines Bandes, also insbesondere als ein Förderband oder als ein Transportband, ausgebildet sein. Der Riemen kann also prinzipiell von einem kraftschlüssigen und/oder formschlüssigen Riementyp sein.

Ein Riemen weist ein Basismaterial auf, das oftmals aus Gummimaterial oder Polyurethanmaterial ist. In das Basismaterial sind Festigkeitsträger eingebettet. Der Riemen kann in einer Umfangsrichtung ringförmig umlaufend oder als endlicher Riemen mit zwei Enden ausgebildet. Sofern der Riemen umlaufend ausgebildet ist, kann jeder Festigkeitsträger als ein durchgängiger, in Umfangsrichtung vorzugsweise schraubenförmig gebündelter Cord in das Gummimaterial eingebettet sein. Sofern dieser Cord mehrere Windungen aufweist, kann es vorgesehen sein, dass der Riemen nur einen Festigkeitsträger aufweist. Es ist jedoch auch möglich, dass der Riemen mehrere Festigkeitsträger aufweist. Jeder dieser Festigkeitsträger kann entsprechend der zuvor genannten Ausgestaltung ausgebildet sein. Aufgrund der hohen Zugkräfte, die auf einen Riemen in Längsrichtung bzw. Umfangsrichtung wirken können, insbesondere in einem zugehörigen Lasttrum, wenn der Riemen für ein Riemengetriebe verwendet wird, ist es in der Praxis von Interesse, welcher Dehnung der Riemen bei der Verwendung unterliegt. Denn oftmals sind für einen Riemen Dehnungsgrenzen vorgesehen, innerhalb der der Riemen ordnungsgemäß Betrieben werden kann. Darüber hinaus kann die im Betrieb auftretende Dehnung des Riemens zumindest indirekt über die Belastung und/oder einen Verschleiß des Riemens Aufschluss geben.

Die aus dem Stand der Technik bekannte Erfassung einer Dehnung eines Riemens mittels optischer Markierungspunkte auf einer Oberseite des Riemens unterliegt insbesondere in staubigen Umgebungsverhältnissen dem Nachteil, dass die optischen Markierungspunkte durch Staub verdeckt sein können und dann nicht exakt messbar sind.

Der Erfindung liegt deshalb die Aufgabe zugrunde, einen Riemen bzw. ein System bereitzustellen, mit dem eine möglichst einfache und zugleich robuste Dehnungsmessung eines Riemens auch in staubigen Umgebungsverhältnissen möglich ist.

Gemäß einem ersten Aspekt der Erfindung wird die genannte Aufgabe gelöst durch einen Riemen mit den Merkmalen des Anspruchs 1. Vorgesehen ist also ein Riemen, der ein Basismaterial und eine Detektorvorrichtung aufweist. Das Basismaterial kann insbesondere aus Gummimaterial oder Polyurethan sein bzw. zumindest darauf basieren. Die Detektorvorrichtung ist in das Basismaterial eingebettet. Die Detektorvorrichtung weist eine Dehnungssensoreinheit zur Erfassung einer Dehnung des Riemens auf. In das Basismaterial sind Festigkeitsträger eingebettet. Die Detektorvorrichtung weist außerdem eine Funkeinheit auf, die zum drahtlosen Empfang eines Energiesignals ausgebildet ist. Die Detektorvorrichtung ist mit einer durch das Energiesignal empfangbaren elektrischen Leistung betreibbar. Außerdem ist die Funkeinheit zum drahtlosen Senden eines Detektorsignals ausgebildet, das die erfasste Dehnung des Riemens repräsentiert.

Die Detektorvorrichtung des Riemens bietet den Vorteil, dass die Erfassung einer Dehnung des Riemens robust gegenüber äußeren Einflüssen, wie Staub, ausgeführt werden kann. Darüber hinaus bedarf die Detektorvorrichtung keiner eigenen Energiequelle zur Energiespeicherung. Vielmehr kann die Detektorvorrichtung ausschließlich mit elektrischer Energie betrieben werden, die über das Energiesignal von der Funkeinheit der Detektorvorrichtung empfangbar ist. Außerdem ist die Funkeinheit der Detektorvorrichtung zum Senden des Detektorsignals ausgebildet, das die erfasste Dehnung des Detektorsignals repräsentiert. Dieses Detektorsignal kann von einem Empfänger empfangen werden, um weitere Auswertungen basierend auf dem Detektorsignal bzw. basierend auf der erfassten Dehnung des Riemens vorzunehmen. Die drahtlöse Übertragung des Detektorsignals bietet deshalb die Möglichkeit, dass auf die Dehnung des Riemens ohne unmittelbaren Kontakt zum Riemen geschlossen werden kann. Dadurch kann eine Feststellung einer Dehnung des Riemens erfolgen. Die Detektorvorrichtung ist darüber hinaus durch die Einbettung in das Basismaterial gegenüber mechanischen, äußeren Einflüssen besonders gut geschützt.

Bei der Dehnung des Riemens handelt es sich um eine relative Dehnung des Riemens oder um eine absolute Längenänderung des Riemens. Bevorzugt handelt es sich jedoch bei der Dehnung um eine relative Dehnung des Riemens

Das Basismaterial kann grundsätzlich von unterschiedlichen Materialien, und zwar einzeln oder in einer gemischten Form, gebildet sein. So kann das Basismaterial beispielsweise aus Gummimaterial oder Polyurethan gebildet sein. Es kann jedoch auch zumindest auf einem der beiden zuvor genannten Materialien basieren. So ist es beispielsweise möglich, dass das Basismaterial zumindest teilweise aus Polyurethan und einem weiteren Material gebildet ist. In diesem Fall basiert das Basismaterial zumindest auf Polyurethan.

Das von der Funkeinheit der Detektorvorrichtung empfangbare Energiesignal ist vorzugsweise ein Funksignal. So kann dieses Funksignal auf einer elektromagnetischen Welle basieren, die zu einem elektromagnetischen bzw. magnetischen Wechselfeld führt. Die Funkeinheit kann dazu ausgebildet sein, elektrische Energie über dieses Wechselfeld bzw. die Welle zu erhalten. Dies stellt dann ein Beispiel für die empfangbare elektrische Energie dar. Die Detektorvorrichtung ist vorzugsweise dazu ausgebildet, ausschließlich mit der durch das Energiesignal empfangbaren, elektrischen Energie betrieben zu werden. Dies gilt auch für die Funkeinheit und die Dehnungssensoreinheit der Detektorvorrichtung. Einer weiteren energiespeichernden Energiequelle, wie einer Batterie, für die Detektorvorrichtung bedarf es deshalb nicht. Ein Riemen mit einer derartigen Detektorvorrichtung ist deshalb besonders universal einsetzbar und erlaubt auch die Nachrüstung eines Riementriebs mit einem derartigen Riemen.

Das Detektorsignal ist vorzugsweise ein Funksignal. Es kann deshalb drahtlos von der Funkeinheit der Detektorvorrichtung an einen Empfänger gesendet werden. Vorzugsweise ist das Basismaterial zum Transmittieren des Detektorsignals und/oder des Energiesignals ausgebildet. Dies erlaubt die Einbettung der Detektorvorrichtung in das Basismaterial.

Eine vorteilhafte Ausgestaltung des Riemens zeichnet sich dadurch aus, dass ein Dehnungssensor der Dehnungssensoreinheit derart angeordnet ist, dass die Dehnungssensoreinheit zur Erfassung der Dehnung des Riemens in einer Längsrichtung des Riemens ausgebildet ist. Der Dehnungssensor ist vorzugsweise mit dem Basismaterial stoffflüssig verbunden. Eine Dehnung des Basismaterials des Riemens führt deshalb zu einer entsprechenden Dehnung des Dehnungssensors, der diese Dehnung erfassen kann. Der Dehnungssensor kann dabei zumindest in einer Richtung zur Erfassung einer Dehnung ausgebildet sein. In diesem Fall ist es bevorzugt vorgesehen, dass die Richtung, in der der Dehnungssensor zur Erfassung einer Dehnung ausgebildet ist, mit der Längsrichtung des Riemens übereinstimmt. Die auf einen Riemen in Längsrichtung wirkende Dehnung ist in der Praxis besonders interessant. Denn die Längsrichtung des Riemens entspricht oftmals der Umfangsrichtung bzw. der Richtung, in der ein Riemen Zugkräfte überträgt. Dies ist oftmals die Hauptwirkungsrichtung des Riemens und deshalb von besonderem Interesse.

Besonders bevorzugt ist es vorgesehen, dass der Dehnungssensor bezogen auf einen Querschnitt des Riemens mittig angeordnet ist. Dadurch lässt sich besonders einfach eine mittlere Dehnung des Riemens erfassen. Außerdem haben mögliche Querkräfte keinen oder einen möglichst nur sehr geringen Einfluss auf die Erfassung der Dehnung des Riemens in Längsrichtung.

Eine weitere vorteilhafte Ausgestaltung des Riemens zeichnet sich dadurch aus, dass der Dehnungssensor der Dehnungssensoreinheit an mindestens einem der Festigkeitsträger direkt oder indirekt angeordnet und/oder befestigt ist. Am Festigkeitsträger kann der Dehnungssensor eine für den Riemen relevante Dehnung erfassen. Dabei kann der Dehnungssensor fest mit dem Festigkeitsträger verbunden sein. Dies wäre dann eine Ausgestaltung für eine direkte Anordnung bzw. eine direkte Befestigung des Dehnungssensors an dem Festigkeitsträger. Es ist jedoch auch möglich, dass der Dehnungssensor in unmittelbarer Nähe, jedoch nicht direkt, also indirekt, an dem Festigkeitsträger angeordnet ist. Auch in diesem Fall wird eine zumindest interessante Dehnung des Riemens mittels des Dehnungssensors erfasst. Festigkeitsträger können besonders bevorzugt in einer sogenannten Neutrallage des Riemens angeordnet sein. Dies gewährleistet, dass die Festigkeitsträger im üblichen Normalfall eines Betriebs bzw. bei einer Verwendung des Riemens keiner dauerhaften Dehnung unterliegen. Eine Dehnung tritt vielmehr zumeist nur in einem Belastungszustand auf.

Wie bereits erwähnt, kann der Dehnungssensor zwar direkt an mindestens einem Festigkeitsträger angeordnet sein, aber dies ist nicht immer notwendig oder vorteilhaft. So kann der Dehnungssensor auch in der Nähe und somit indirekt an dem Festigkeitsträger angebracht sein. Dabei kann der Dehnungssensor in einem vorbestimmten Abstand zu dem Festigkeitsträger angeordnet sein. Festigkeitsträger können aus Kunststoff oder Metall sein. So können die Festigkeitsträger beispielsweise aus Stahldraht gebildet sein. Bei Festigkeitsträger aus Stahl ist besonders bevorzugt ein Mindestabstand zwischen den Festigkeitsträgern vorgesehen, um zu gewährleisten, dass das Energiesignal und/oder das Detektorsignal einer möglichst geringen elektromagnetischen Störung unterliegen. Außerdem hat es sich als vorteilhaft herausgestellt, wenn der Dehnungssensor in der Nähe oder direkt an einer neutralen Faser der Festigkeitsträger angeordnet ist. Denn diese Faser unterliegt einer besonders geringen Biegung.

Eine weitere vorteilhafte Ausgestaltung des Riemens zeichnet sich dadurch aus, dass der Dehnungssensor der Dehnungssensoreinheit als ein Widerstandsdehnungsmessstreifen oder als ein kapazitiver Dehnungsmessstreifen ausgebildet ist. Die Ausgestaltung des Dehnungssensors als ein Dehnungsmessstreifen bildet eine vorteilhafte Ausgestaltung. Denn Dehnungsmessstreifen können eine hohe Messgenauigkeit bei einem geringen Preis bieten. Außerdem können Dehnungsmessstreifen sehr kompakt ausgestaltet sein. Sie lassen sich deshalb besonders gut in das Basismaterial des Riemens einbetten. Dies erlaubt eine besonders präzise Erfassung der Dehnung des Riemens.

Eine weitere vorteilhafte Ausgestaltung des Riemens zeichnet sich dadurch aus, dass die Dehnungssensoreinheit eine Messbrücke aufweist, die mit dem Dehnungssensor der Dehnungssensoreinheit gekoppelt ist. Die Messbrücke kann als eine sogenannte Vollbrücke oder Halbbrücke ausgebildet sein. So kann die Messbrücke beispielsweise als eine Wheatstone Messbrücke ausgebildet sein. Der Dehnungsmessstreifen, insbesondere ausgebildet als Widerstandsdehnungsmessstreifen oder als kapazitiver Dehnungsmessstreifen, kann dabei in einem der Zweige der Messbrücke integriert sein oder diesen zumindest im Wesentlichen bilden. Mittels der Messbrücke kann eine Vorauswertung erfolgen und/oder eine Messschaltung realisiert werden.

Eine weitere vorteilhafte Ausgestaltung des Riemens zeichnet sich dadurch aus, dass die Dehnungssensoreinheit einen Messoszillator aufweist, der mit dem Dehnungssensor gekoppelt ist. Dabei kann der Dehnungssensor beispielsweise derart mit dem Messoszillator gekoppelt sein, so dass eine Messgröße des Dehnungssensors zu einer Veränderung einer Oszillatorfrequenz des Messoszillators führt. Dies kann beispielsweise durch eine Veränderung des elektrischen Widerstands des Dehnungssensors erfolgen. Die Oszillatorfrequenz kann sodann zumindest indirekt die Dehnung des Riemens repräsentieren. Die Dehnungssensoreinheit kann außerdem einen Referenzmessoszillator aufweisen, der mit einem Referenzwiderstand gekoppelt ist. Der Referenzwiderstand kann dabei einen sogenannten Dummy-Dehnungssensor bilden. Die Dehnungssensoreinheit kann dazu ausgebildet sein, die Oszillatorfrequenz des Referenzoszillators mit der Oszillatorfrequenz des Messoszillators zu vergleichen, um resultierend hieraus ein Messergebnis zu ermitteln. Dieses Messergebnis kann die Dehnung des Riemens direkt oder indirekt repräsentieren. Mittels des Messoszillators und/oder Referenzoszillators kann eine Messschaltung für die Dehnungssensoreinheit und/oder eine Vorauswertungsschaltung für die Dehnungssensoreinheit realisiert werden.

Eine weitere vorteilhafte Ausgestaltung des Riemens zeichnet sich dadurch aus, dass die Detektorvorrichtung eine Innentemperatursensoreinheit zur Erfassung einer Riementemperatur des Riemens aufweist, wobei das Detektorsignal außerdem die erfasste Riementemperatur repräsentiert. Die Temperatur eines Riemens ist in der Praxis von Interesse. Denn oftmals sind für Riemen Temperaturgrenzen vorgesehen, innerhalb der der Riemen ordnungsgemäß betrieben werden kann. Bei der Riementemperatur des Riemens handelt es sich vorzugsweise um die Kerntemperatur des Riemens. Die Riementemperatur kann zumindest indirekt über die Belastung und/oder einen Verschleiß des Riemens Aufschluss geben. Schließlich kann die Riementemperatur dazu verwendet werden, um eine besonders exakte Dehnung des Riemens zu ermitteln. Denn die Riementemperatur kann Einfluss auf die Erfassung der Dehnung des Riemens mittels der Dehnungssensoreinheit haben. Die erfasste Riementemperatur kann deshalb zur Korrektur herangezogen werden.

Eine weitere vorteilhafte Ausgestaltung des Riemens zeichnet sich dadurch aus, dass die Detektorvorrichtung eine Innentemperatursensoreinheit zur Erfassung einer Riementemperatur des Riemens aufweist, wobei die Detektorvorrichtung zur Korrektur der erfassten Dehnung des Riemens basierend auf der erfassten Riementemperatur des Reimens ausgebildet sein, so dass die korrigierte, erfasste Dehnung von dem Detektorsignal repräsentiert ist. In diesem Fall kann darauf verzichtet werden, dass das Detektorsignal auch die Riementemperatur repräsentiert. Allerdings ist dies weiterhin möglich.

Eine weitere vorteilhafte Ausgestaltung des Riemens zeichnet sich dadurch aus, dass die Detektorvorrichtung eine Außentemperatursensoreinheit zur Erfassung einer Temperatur der Umgebung des Riemens als Referenztemperatur aufweist, wobei das Detektorsignal außerdem die erfasste Referenztemperatur repräsentiert. Die Außentemperatursensoreinheit kann zumindest teilweise außerhalb des Riemens angeordnet sein und/oder zumindest teilweise aus dem Riemen herausragen, um die Temperatur der Umgebung, also die Außentemperatur, des Riemens zu erfassen. Diese Außentemperatur wird auch als Referenztemperatur bezeichnet, da sie als einen Referenzpunkt bei der Ermittlung einer Dehnung berücksichtig werden kann, was zu einer präziseren und/oder verlässlicheren Ermittlung der Dehnung führt. Die Außentemperatur kann Einfluss auf die Erfassung der Dehnung haben. Deshalb kann die Außentemperatur auch bei der Korrektur der erfassten Dehnung berücksichtig werden. Die Detektorvorrichtung und/oder die Dehnungssensoreinheit kann bzw. können hierzu ausgebildet sein. So kann die Detektorvorrichtung oder die Dehnungssensoreinheit zur Korrektur der erfassten Dehnung des Riemens basierend auf der Außentemperatur des Reimens ausgebildet sein, so dass die korrigierte, erfasste Dehnung von dem Detektorsignal repräsentiert ist. In diesem Fall kann darauf verzichtet werden, dass das Detektorsignal auch die Außentemperatur repräsentiert. Allerdings ist dies weiterhin möglich.

Eine weitere vorteilhafte Ausgestaltung des Riemens zeichnet sich dadurch aus, dass die Detektorvorrichtung eine Beschleunigungssensoreinheit zur Erfassung einer Beschleunigung des Riemens aufweist, wobei das Detektorsignal die erfasste Beschleunigung oder eine auf der erfassten Beschleunigung zumindest indirekt basierenden Größe des Riemens repräsentiert. Indem das Detektorsignal nunmehr also die Beschleunigung und eine Dehnung des Riemens repräsentier kann, können weitere qualifiziertere Aussagen über einen Belastungszustand des Riemens ermittelt werden. Ist die erfasste Beschleunigung des Riemens gering, so lässt dies den Schluss zu, dass die erfasste Dehnung des Riemens eine Dehnung im stationären Zustand des Riemens oder bei einer konstanten Geschwindigkeit des Riemens repräsentiert. Beim Anfahren oder beim Abbremsen des Riemens können höhere Belastungszustände auftreten. In jedem der beiden Fälle Fall erfährt der Riemen im Trumbereich eine Beschleunigung. Wird die Dehnung des Riemens hier entsprechend erhöhten Beschleunigungswerten erfasst, kann die zuvor genannte Zuordung zu einem Anfahrtszustand bzw. einen Bremszustand des Riemens vorgenommen werden.

Eine weitere vorteilhafte Ausgestaltung des Riemens zeichnet sich dadurch aus, dass die Detektorvorrichtung batteriefrei ausgebildet ist. Die Detektorvorrichtung weist insbesondere keine Mittel zur Speicherung von Energie auf. So kann die Detektorvorrichtung dazu ausgebildet sein, nur durch die von dem Energiesignal übertragene Energie gespeist und/oder betrieben zu sein. Die Detektorvorrichtung kann deshalb auch als eine passive Detektorvorrichtung bezeichnet sein.

Eine weitere vorteilhafte Ausgestaltung des Riemens zeichnet sich dadurch aus, dass die Detektorvorrichtung berührungslos ausgebildet ist. So kann die Detektorvorrichtung beispielsweise derart in das Basismaterial eingebettet sein, dass die Detektorvorrichtung vollständig von dem Basismaterial umgeben ist. Dadurch wird verhindert, dass die Detektorvorrichtung berührt werden kann. Sie ist also berührungslos in dem Riemen ausgebildet. Da die Detektorvorrichtung jedoch zum drahtlosen Empfang von Energie und zum drahtlosen Senden des Detektorsignals ausgebildet ist, kann dennoch auf die zuvor erläuterten Sensorergebnisse geschlossen werden.

Eine weitere vorteilhafte Ausgestaltung des Riemens zeichnet sich dadurch aus, dass die Detektorvorrichtung als eine gedruckte Detektorvorrichtung ausgebildet ist. Dies erlaubt eine besonders effiziente und/oder einfache Herstellung des Riemens. Denn die Einbettung der Detektorvorrichtung in das Basismaterial des Riemens kann ohne große Unterbrechung während der Herstellung des Riemens bzw. des Basismaterial erfolgen. So kann die Detektorvorrichtung in das Basismaterial gedruckt werden. Vorzugsweise ist zumindest die Dehnungssensoreinheit der Detektorvorrichtung als eine gedruckte Dehnungssensoreinheit ausgebildet. Entsprechendes kann für die Funkeinheit gelten. So kann zumindest die Funkeinheit der Detektorvorrichtung als eine gedruckte Funkeinheit ausgebildet sein.

Eine weitere vorteilhafte Ausgestaltung des Riemens zeichnet sich dadurch aus, dass die Detektorvorrichtung als eine integrierte Schaltung, insbesondere eine gedruckte integrierte Schaltung, ausgebildet ist. Dadurch kann die Detektorvorrichtung eine besonders kompakte Form aufweisen. Damit lässt sich die Detektorrichtung besonders platzsparend in das Basismaterial des Riemens einbetten.

Gemäß einem zweiten Aspekt der Erfindung wird die eingangs genannte Aufgabe gelöst durch ein System mit den Merkmalen des Anspruchs 12.

Vorgesehen ist also ein System, das einen Riementrieb mit einem Riemen aufweist. Bezüglich des Riemens wird auf die vorangegangenen, vorteilhaften Erläuterungen, bevorzugten Merkmale, Effekte und/oder Vorteile zumindest in analoger Weise Bezug genommen, wie sie im Zusammenhang mit dem Reimen nach dem ersten Aspekt der Erfindung und/oder einer der zugehörigen, vorteilhaften Ausgestaltungen erläutert worden ist. Das System weist außerdem eine Auswertevorrichtung mit einer Transmittereinheit auf. Die Transmittereinheit ist zum Empfang des Detektorsignals ausgebildet, das zumindest die erfasste Dehnung des Riemens repräsentiert. Die Auswertevorrichtung ist zur Ermittlung einer Dehnungsgröße basierend auf dem Detektorsignal ausgebildet, wobei die Dehnungsgröße eine absolute oder relative Dehnung des Riemens repräsentiert.

Der Riementrieb kann als Riementrieb mit dem Riemen als ein umlaufender Riemen oder als ein Lineartrieb mit dem Riemen als ein endlicher Riemen ausgebildet sein. Bevorzugt ist der Riementrieb jedoch derart ausgebildet, dass der Riemen als ein umlaufender Riemen über Umlenkrollen umgelenkt und/oder angetrieben ist. Die Transmittereinheit der Auswertevorrichtung ist vorzugsweise berührungsfrei zu dem Riemen angeordnet. Sie kann das Detektorsignal deshalb drahtlos von der Detektorvorrichtung im Riemen empfangen. Wie zuvor erläutert, repräsentiert das Detektorsignal zumindest die von der Dehnungssensoreinheit erfasste Dehnung des Riemens. Dabei kann das Detektorsignal bereits die korrigierte, erfasste Dehnung und/oder auch weitere erfasste Größen, wie beispielsweise die erfasste Riementemperatur, die erfasste Referenztemperatur und/oder die erfasste Beschleunigung, repräsentieren.

Das von der Transmittereinheit empfangene Detektorsignal wird von der Auswertevorrichtung verwendet, um die Dehnungsgröße basierend auf dem erfassten Detektorsignal bzw. den von dem Detektorsignal repräsentierten Größen zu ermitteln. Hierzu ist die Auswertevorrichtung entsprechend konfiguriert. So kann die Auswertevorrichtung dazu konfiguriert sein, die relative Dehnung des Riemens als die Dehnungsgröße zu ermitteln. Es ist aber auch möglich, dass die Auswertevorrichtung dazu konfiguriert ist, die absolute Längendehnung des Riemens als die Dehnungsgröße zu ermitteln. Dabei kann es vorgesehen sein, dass die Umfangslänge oder die Länge des Riemens von der Auswertevorrichtung gespeichert ist. In diesem Fall kann die von der Detektorvorrichtung erfasste Dehnung eine relative Dehnung des Riemens sein. Die Auswertevorrichtung kann dazu konfiguriert sein, die absolute Längendehnung des Riemens als Dehnungsgröße basierend auf der relativen Dehnung und der Länge bzw. Umfangslänge des Riemens zu ermitteln. Die Auswertevorrichtung kann außerdem dazu konfiguriert sein, bei der Ermittlung der Dehnungsgröße noch weitere Parameter zu berücksichtigen. So kann die Auswertevorrichtung dazu konfiguriert sein, die Dehnungsgröße basierend auf der von dem Detektorsignal repräsentierten, erfassten Dehnung des Riemens und mindestens einer weiteren von den Detektorsignal repräsentierten Größe zu ermitteln. Die mindestens eine weitere von dem Detektorsignal repräsentierte Größe kann beispielsweise die Riementemperatur, die Außentemperatur und/oder die Beschleunigung des Riemens sein, die mittels der Detektorvorrichtung des Riemens erfassbar ist.

Bezüglich der weiteren Vorteile und Effekte des Systems wird auf die vorteilhaften Erläuterungen, Effekte und/oder Vorteile, wie sie im Zusammenhang mit dem Riemen gemäß dem ersten Aspekt und/oder einer der zugehörigen vorteilhaften Ausgestaltungen erläutert worden sind, in analoger Weise verwiesen.

Eine vorteilhafte Ausgestaltung des Systems zeichnet sich dadurch aus, dass der Riemen von mehreren Rollen des Riementriebs derart umgelenkt ist, dass der Riemen einen Zugtrum aufweist, wobei die Transmittereinheit berührungsfrei an dem Zugtrum des Riemens angeordnet ist. In diesem Fall kann der Riemen als ein ringförmig umlaufender Riemen ausgebildet sein. Bei den Rollen handelt es sich vorzugsweise um Umlenkrollen oder um Umlenkscheiben. Mindestens eine der Rollen kann als eine Antriebsrolle bezeichnet und/oder ausgebildet sein. Die Transmittereinheit weist keinen direkten Kontakt zu dem Zugtrum auf. Vielmehr kann es vorgesehen sein, dass die Transmittereinheit einen vorbestimmten Abstand zu dem Zugtrum aufweist und/oder entsprechend angeordnet ist. Der vorbestimmte Abstand kann an die Umstände in der Praxis angepasst sein. Bei einem sehr kurzen Zugtrum kann der Abstand beispielsweise kleiner gewählt werden als bei einem sehr langen Zugtrum. Im Zugtrum treten oftmals die höchsten Belastungen und damit oftmals auch die höchsten Dehnungen des Riemens auf, so dass die Erfassung der Dehnung mittels der Detektorvorrichtung im Zugtrum und der Übertragung des Detektorsignals an die Transmittereinheit, die in unmittelbarer Nähe am Zugtrum angeordnet ist, von hohem Interesse.

Eine weitere vorteilhafte Ausgestaltung des Systems zeichnet sich dadurch aus, dass die Auswertevorrichtung ausgebildet ist, die Dehnungsgröße basierend auf der von dem Detektorsignal repräsentierten Dehnung und auf der von dem Detektorsignal repräsentierten Temperatur, insbesondere Riementemperatur und/oder Außentemperatur, zu ermitteln. Dadurch kann besonders einfach gewährleistet werden, dass Temperatureinflüsse bei der Ermittlung der Dehnungsgröße berücksichtigt werden können. So können die Riementemperatur und/oder die Außentemperatur, die auch als Referenztemperatur bezeichnet wird, bei der Ermittlung der Dehnungsgröße als ein Korrekturfaktor einfließen.

Eine weitere vorteilhafte Ausgestaltung des Systems zeichnet sich dadurch aus, dass die Transmittereinheit zum Erzeugen und Aussenden des Energiesignals ausgebildet ist. Hierbei handelt es sich vorzugsweise um das Energiesignal, das von der Funkeinheit empfangbar ist und das zur Übertragung von elektrischer Energie an die Funkeinheit ausgebildet ist. Dies gewährleistet eine kompakte Ausgestaltung des Gesamtsystems. Denn insbesondere die Detektorvorrichtung bedarf deshalb keiner eigenen Energiequelle zur Speicherung von Energie. Vielmehr kann die Energie über die Transmittereinheit an die Funkeinheit der Detektorvorrichtung übertragen werden.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung eines Riemens in einer schematischen Seitenansicht.
- Figur 2: zeigt einen Querschnitt einer vorteilhaften Ausgestaltung eines Riemens in einer schematischen Ansicht.
- Figur 3: zeigt eine vorteilhafte Ausgestaltung eines Abschnitts eines Riemens in einer schematischen Draufsicht.
- Figur 4: zeigt eine vorteilhafte Ausgestaltung eines Systems in einer schematischen Darstellung.
- Figur 5: zeigt eine vorteilhafte Ausgestaltung einer Messbrücke in einer schematischen Darstellung.
- Figur 6: zeigt eine vorteilhafte Ausgestaltung eines Messoszillators in einer schematischen Darstellung.
- Figur 7: zeigt eine vorteilhafte Ausgestaltung eines Dehnungsmessstreifens in einer schematischen Darstellung.

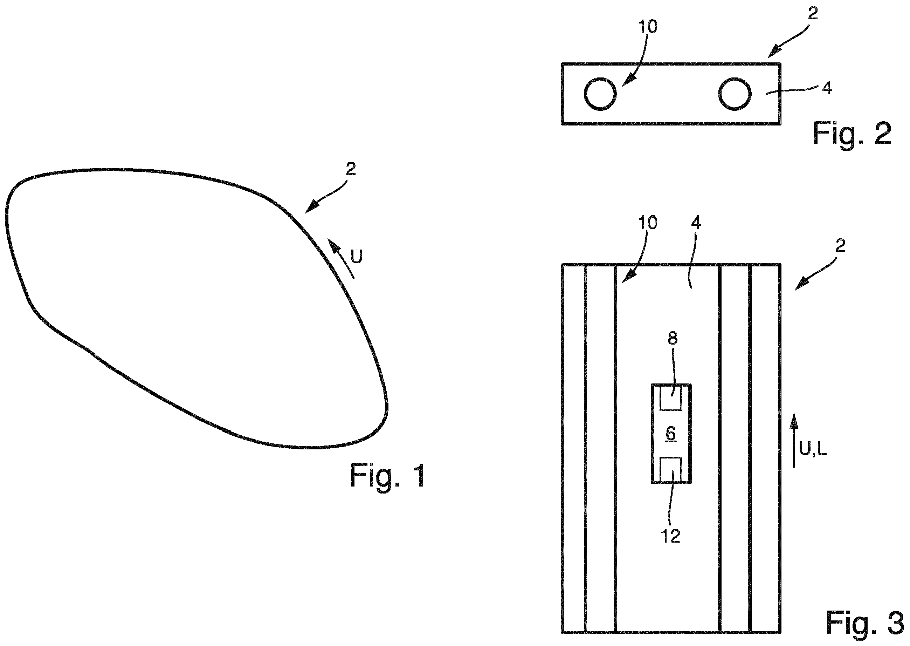

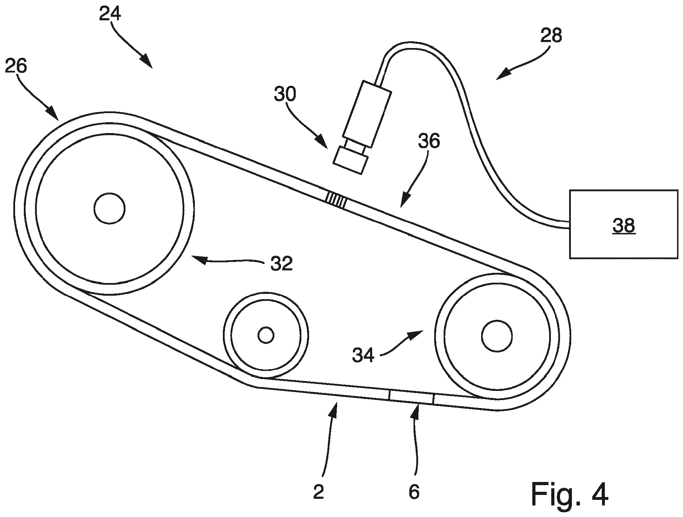

In der Figur 1 ist eine vorteilhafte Ausgestaltung eines Riemens 2 in einer schematischen Seitenansicht wiedergegeben. Bei dem Riemen 2 handelt es sich beispielsweise um einen in einer Umfangsrichtung U ringförmig umlaufend ausgebildeten Riemen 2. Dieser Riemen 2 kann deshalb dazu ausgebildet sein, um für einen Riementrieb 26, wie dieser beispielhaft in der Figur 4 gezeigt ist, verwendet zu werden.

In der Figur 2 ist ein Querschnitt des Riemens 2 beispielhaft und schematisch dargestellt. Der Riemen 2 weist ein Basismaterial 4 auf, das vorzugsweise von Gummimaterial oder Polyurethan gebildet ist. In das Basismaterial 4 sind Festigkeitsträger 10 eingebettet. Hierbei kann es sich um mindestens einen Festigkeitsträger 10 oder mehrere Festigkeitsträger 10 handeln. Die Festigkeitsträger 10 können miteinander verbunden sein. Sodann bilden sie wieder einen gemeinsamen Festigkeitsträger. Im Weiteren wird jedoch beispielhaft von mehreren Festigkeitsträgern 10 ausgegangen. Jeder Festigkeitsträger 10 kann von einem durchgängigen, in Umfangsrichtung U schraubenförmig gewendelten Cord gebildet sein, das in das Basismaterial 4 eingebettet ist. Jeder Cord kann von einem Kunststoff-Cord oder von einem Metalldraht, wie einem Stahldraht, gebildet sein. Grundsätzlich kann auch ein Gewebe (nicht dargestellt) ein Festigkeitsträger von einem Riemen 2 bilden.

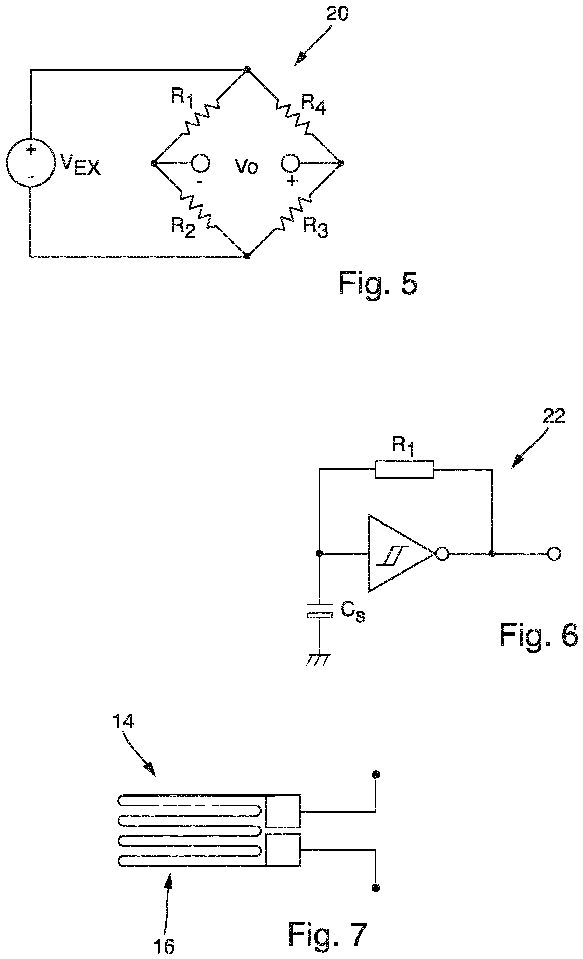

Außerdem weist der Riemen 2 eine Detektorvorrichtung 6 auf, die in das Basismaterial 4 eingebettet ist. In diesem Zusammenhang wird auf die Figur 3 verwiesen. Die Detektorvorrichtung 6 weist eine Dehnungssensoreinheit 8 und eine Funkeinheit 12 auf. Die Dehnungssensoreinheit 8 ist zur Erfassung einer Dehnung des Riemens 2, insbesondere in einer Längsrichtung L bzw. einer Umfangsrichtung U, ausgebildet. Die Funkeinheit 12 ist zum drahtlosen Empfang eines Energiesignals ausgebildet. Die Detektorvorrichtung 6 ist außerdem ausgebildet, mit der durch das Energiesignal empfangbaren elektrischen Energie insbesondere ausschließlich betrieben zu werden. Die Funkeinheit 12 ist außerdem zum drahtlosen Senden eines Detektorsignals ausgebildet, das die mittels der Dehnungssensoreinheit 8 erfasste Dehnung des Riemens 2 repräsentiert. Bei der Dehnung handelt es sich vorzugsweise um eine relative Dehnung. Außerdem bezieht sich die Dehnung vorzugsweise auf eine relative Dehnung in Umfangsrichtung U bzw. auf eine relative Dehnung des Riemens 2 in Längsrichtung L. Die Dehnungssensoreinheit 8 der Detektorvorrichtung 6 kann dazu beispielsweise einen Dehnungssensor 14, insbesondere ausgestaltet als Dehnungsmessstreifen 16, aufweisen. Ein Beispiel eines Dehnungsmessstreifens 16 als zumindest einen Teil eines Dehnungssensors 14 ist in der Figur 7 schematisch und rein beispielhaft wiedergegeben. Der Dehnungssensor 14 bzw. der als Dehnungsmessstreifen 16 ausgebildete Dehnungssensor 14 ist vorzugsweise derart angeordnet und/oder im Basismaterial 4 des Riemens 2 eingebettet, so dass eine auf den Riemen 2 in Längsrichtung L bzw. Umfangsrichtung U wirkende Dehnung zu einer entsprechenden Dehnung des Dehnungssensors 14 bzw. des Dehnungsmessstreifens 16 führt. Die Erfassung der Dehnung in Umfangsrichtung U bzw. in Längsrichtung L ist in der Praxis besonders relevant. Denn diese Richtung U, L dient in der Praxis zur zweckmäßigen Zugkraftübertragung. Die Festigkeitsträger 10 sind deshalb ebenfalls in Umfangsrichtung U bzw. in Längsrichtung L ausgerichtet.

Die Detektorvorrichtung 6 ist vorzugsweise vollständig in das Basismaterial 4 des Riemens 2 eingebettet. Dies gewährleistet, dass die Detektorvorrichtung 6, und somit auch die zugehörige Dehnungssensoreinheit 8 sowie die Funkeinheit 12, vor äußeren mechanischen Einflüssen geschützt ist bzw. sind. Besonders vorteilhaft hat es sich herausgestellt, wenn die Dehnungssensoreinheit 8 bzw. der zugehörige Dehnungssensor bezogen auf den insbesondere in Figur 2 beispielhaft dargestellten Querschnitt des Riemens 2 mittig angeordnet ist. Dadurch können mögliche Quereinflüsse der Erfassung der Dehnung mittels der Dehnungssensoreinheit 8 bzw. mittels des zugehörigen Dehnungssensors auf ein Minimum reduziert sein.

Das Basismaterial 4 des Riemens 2 ist vorzugsweise ausgebildet, so dass das Energiesignal und das Detektorsignal durch das Basismaterial 4 transmittieren können. Dadurch kann auch die Detektorvorrichtung 6 vollständig in das Basismaterial 4 eingebettet sein.

Der Riemen 2 mit der in das Basismaterial 4 eingebetteten Detektorvorrichtung 6 bietet den Vorteil, dass drahtlos bzw. per Funk auf eine Dehnung des Riemens 2 geschlossen werden kann. Außerdem bedarf die Detektorvorrichtung 6 keine eigene Energiequelle zur Speicherung von Energie. Denn die Funkeinheit 12 der Detektorvorrichtung 6 ist zum Empfang des Energiesignals ausgebildet, dass zur Übertragung von Energie an die Funkeinheit 12 und somit an die gesamte Detektorvorrichtung 6 ausgebildet ist. Die Detektorvorrichtung 6 kann mit der durch das Energiesignal empfangenen elektrischen Energie vollständig betrieben werden. Dies gilt deshalb auch für die Dehnungssensoreinheit 8. Die von der Dehnungssensoreinheit 8 erfasste Dehnung des Riemens 2 wird mittels der Funkeinheit 12 durch das Detektorsignal drahtlos versendet, wobei das Detektorsignal die erfasste Dehnung des Riemens 2 repräsentiert. Dieses Detektorsignal kann von einem Empfänger, beispielsweise von der Transmittereinheit 30 der in Figur 4 beispielhaft dargestellten Auswertevorrichtung 28 des Systems 24 empfangen werden. Auf die vorteilhaften Details des Systems 24 wird in einem späteren Absatz eingegangen.

Wie bereits erläutert, kann die Dehnungssensoreinheit 8 einen Dehnungssensor 14 aufweisen. Als Beispiel wurde bereits auf die in Figur 7 dargestellte Ausgestaltung des Dehnungsmessstreifens 16 verwiesen. Hierbei kann es sich um einen Widerstandsdehnungsmessstreifen handeln. Grundsätzlich kann der Dehnungsmessstreifen 16 jedoch auch von einem kapazitiven Messstreifen (nicht dargestellt) gebildet sein. Der Dehnungsmessstreifen 16 bzw. der Dehnungssensor 14 kann dabei als einer der Widerstände R1, R2, R3 oder R4 einer Messbrücke 20 wirken, die beispielhaft in der Figur 5 dargestellt ist. So kann der Dehnungsmessstreifen 16 beispielsweise einen Widerstand R1 in der Messbrücke 20 bilden. Die zum Betreiben der Messbrücke 20 schematisch dargestellte Spannung Vₑₓ wird dabei durch die mittels des Energiesignals empfangene Energie gebildet. Die Messbrücke 20 kann einen Teil der Dehnungssensoreinheit 8 bilden.

Für die Dehnungssensoreinheit 8 ist es jedoch auch möglich, dass diese einen Messoszillator 22 aufweist, wie dieser rein beispielhaft in der Figur 6 schematisch dargestellt ist. Dabei wird der Eingang eines Verstärkers mit einem Kondensator Cₛ und einem Widerstand R1 beschaltet. Der Widerstand R1 kann dabei von einem als Widerstandsdehnungsmessstreifen 18 ausgebildeten Dehnungsmessstreifen 16 gebildet sein. Sofern der Dehnungsmessstreifen 16 als eine kapazitive Dehnungsmessstreifen ausgebildet ist, kann von dem Dehnungsmessstreifen 16 beispielsweise die Kapazität Cₛ des Messoszillators 22 gebildet sein.

Wie bereits erwähnt, wird in der Figur 4 eine vorteilhafte Ausgestaltung des Systems 24 schematisch wiedergegeben. Das System 24 weist einen Riemen 2 auf, der einen Teil eines Riementriebs 26 bildet. Der Riementrieb 26 kann dabei außerdem mehrere Rollen 32, 34 aufweisen, die von dem Riemen 2 zumindest teilweise umschlungen sind. Jede der Rollen 32, 34 kann als Umlenkrolle oder Umlenkscheibe ausgebildet und/oder bezeichnet sein. Eine der Rollen 32, 34 kann dabei als eine Antriebsrolle ausgebildet sein. Der Riemen 2 läuft deshalb in Umfangsrichtung U mittels der Rollen 32, 34 um. Dadurch kann gewährleistet werden, dass eine im Basismaterial 4 des Riemens 2 eingebettete Detektorvorrichtung 6 in periodischen Zeitabständen an einer stationär angeordneten Transmittereinheit 30 einer Auswertevorrichtung 28 des Systems 24 vorbeigeführt wird. Die Transmittereinheit 30 ist zum Empfang des Detektorsignals ausgebildet, das von der Funkeinheit 12 der Detektorvorrichtung 6 versendet wird und zumindest die erfasste Dehnung des Riemens 2 repräsentiert. Die Auswertevorrichtung 28 ist außerdem zur Ermittlung einer Dehnungsgröße basierend auf dem empfangenen Detektorsignal ausgebildet, wobei die Dehnungsgröße eine absolute Dehnung des Riemens 2 oder eine relative Dehnung des Riemens 2 repräsentiert.

Von der Dehnungssensoreinheit 8 der Detektorvorrichtung 6 wird zumeist die relative Dehnung des Riemens 2 erfasst, so dass auch das Detektorsignal zumindest oftmals die relative Dehnung des Riemens 2 repräsentiert. Sofern dies der Fall ist, kann die Auswertevorrichtung 28 dazu konfiguriert sein, die Dehnungsgröße als die relative Dehnung des Riemens 2 zu ermitteln. Es ist jedoch auch möglich, dass von der Auswertevorrichtung 28 beispielsweise die Länge des Riemens 2 in Umfangsrichtung U gespeichert ist. In diesem Fall kann die Auswertevorrichtung 28 zur Ermittlung einer Dehnungsgröße basierend auf der bekannten Länge des Riemens 2 und auf dem Detektorsignal ausgebildet werden, sodass die Dehnungsgröße die absolute Dehnung des Riemens repräsentiert.

Um eine möglichst wartungsfreie Ausgestaltung des Systems 24 zu gewährleisten, ist es bevorzugt vorgesehen, dass die Transmittereinheit 30 berührungsfrei zu dem Riemen 2 und/oder in einem vorbestimmten Abstand zu dem Riemen 2 angeordnet ist. Dies verhindert, dass es zu einer mechanischen Reibung zwischen der Transmittereinheit 30 und dem Riemen 2 kommt.

Als besonders vorteilhaft hat es sich herausgestellt, wenn von dem Riemen 2 ein Zugtrum 36 zwischen zwei Rollen 32, 34 gebildet ist, wobei die Transmittereinheit 30 berührungsfrei und/oder in einem vorbestimmten Abstand zu dem Zugtrum 36 des Riemens 2 angeordnet ist. Denn der Zugtrum 36 unterliegt im Betrieb für gewöhnlich einer hohen Zugbelastung, was zu einer entsprechenden Dehnung des Riemens 2 im Bereich des Zugtrums 36 führt. Die Erfassung der Dehnung im Zugtrum 36 gibt deshalb besonders verlässlich darüber Aufschluss, welcher Belastung der Riemen 2 unterliegt.

Um die mittels der Auswertevorrichtung 28 ermittelte Dehnungsgröße optisch darzustellen, kann der Auswertevorrichtung 28 eine Anzeigeeinheit 38 zugeordnet sein. Die Auswertevorrichtung 28 kann dazu ausgebildet und/oder konfiguriert sein, die Dehnungsmessgröße und/oder eine auf dieser Dehnungsmessgröße basierende Größe auf der Anzeigeeinheit 38 anzuzeigen.

Darüber hinaus ist es bevorzugt vorgesehen, dass die Transmittereinheit 30 der Auswertevorrichtung 28 zum Erzeugen und Aussenden des Energiesignals ausgebildet ist, das mittels der Funkeinheit 12 der Detektorvorrichtung 6 des Riemens 2 empfangbar ist. Damit lässt sich also elektrische Energie von der Transmittereinheit 30 an die Detektorvorrichtung 6 drahtlos übertragen. Das System 24 ist damit besonders wartungsarm und zugleich einfach zu handhaben. Darüber hinaus ist die Erfassung der Dehnung des Riemens 2 besonders präzise, da die Detektorvorrichtung 6 in das Basismaterial 4 des Riemens 2 eingebettet ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste (Teil der Beschreibung)

- U: Umfangsrichtung
- L: Längsrichtung

- 2: Riemen
- 4: Basismaterial
- 6: Detektorvorrichtung
- 8: Dehnungssensoreinheit
- 10: Festigkeitsträger
- 12: Funkeinheit
- 14: Dehnungssensor
- 16: Dehnungsmessstreifen
- 18: Widerstandsdehnungsmessstreifen
- 20: Messbrücke
- 22: Messoszillator
- 24: System
- 26: Riementrieb
- 28: Auswertevorrichtung
- 30: Transmittereinheit
- 32: Rolle
- 34: Rolle
- 36: Zugtrum
- 38: Anzeigeeinheit

## Patentansprüche

1. Riemen (2), aufweisend:
ein Basismaterial (4), insbesondere aus Gummimaterial oder Polyurethan, und
eine Detektorvorrichtung (6), die in das Basismaterial (4) eingebettet ist,
wobei die Detektorvorrichtung (6) eine Dehnungssensoreinheit (8) zur Erfassung einer Dehnung des Riemens (2) aufweist,
wobei Festigkeitsträger (10) in das Basismaterial (4) eingebettet sind,
wobei die Detektorvorrichtung (6) eine Funkeinheit (12) aufweist, die zum drahtlosen Empfang eines Energiesignals ausgebildet ist,
wobei die Detektorvorrichtung (6) mit einer durch das Energiesignal empfangbaren elektrischen Energie betreibbar ausgebildet ist, und
wobei die Funkeinheit (12) zum drahtlosen Senden eines Detektorsignals ausgebildet ist, das die erfasste Dehnung des Riemens (2) repräsentiert.

2. Riemen (2) nach dem vorhergehenden Anspruch, **dadurch gekennzeichnet, dass** ein Dehnungssensor (14) der Dehnungssensoreinheit (8) derart angeordnet ist, so dass die Dehnungssensoreinheit (8) zur Erfassung der Dehnung des Riemens (2) in einer Längsrichtung (L) des Riemens (2) ausgebildet ist.

3. Riemen (2) nach dem vorhergehenden Anspruch, **dadurch gekennzeichnet, dass** der Dehnungssensor (14) der Dehnungssensoreinheit (8) an mindestens einem der Festigkeitsträger (10) indirekt oder direkt angeordnet und/oder befestigt ist.

4. Riemen (2) nach einem der vorhergehenden Ansprüche 2 bis 3, **dadurch gekennzeichnet, dass** der Dehnungssensor (14) als ein Widerstandsdehnungsmessstreifen (18) oder ein kapazitiven Dehnungsmessstreifen (16) ausgebildet ist.

5. Riemen (2) nach einem der vorhergehenden Ansprüche 2 bis 4, **dadurch gekennzeichnet, dass** die Dehnungssensoreinheit (8) eine Messbrücken (20), insbesondere eine Wheatstone Messbrücke (20), aufweist, die mit dem Dehnungssensor (14) gekoppelt ist.

6. Riemen (2) nach einem der vorhergehenden Ansprüche 2 bis 4, **dadurch gekennzeichnet, dass** die Dehnungssensoreinheit (8) einen Messoszillator (22) aufweist, der mit dem Dehnungssensor (14) gekoppelt ist.

7. Riemen (2) nach einem der vorhergehenden Ansprüche, **dadurch gekennzeichnet, dass** die Detektorvorrichtung (6) eine Innentemperatorsensoreinheit zur Erfassung einer Riementemperatur des Riemens (2) aufweist, wobei das Detektorsignal außerdem die erfasste Riementemperatur repräsentiert, und/oder dass die Detektorvorrichtung (6) eine Außentemperatorsensoreinheit zur Erfassung einer Temperatur der Umgebung des Riemens (2) als Referenztemperatur aufweist, wobei das Detektorsignal außerdem die erfasste Referenztemperatur repräsentiert.

8. Riemen (2) nach einem der vorhergehenden Ansprüche, **dadurch gekennzeichnet, dass** die Detektorvorrichtung (6) eine Beschleunigungssensoreinheit zur Erfassung einer Beschleunigung des Riemens (2) aufweist, wobei das Detektorsignal die erfasste Beschleunigung oder eine auf der erfassten Beschleunigung zumindest indirekt basierende Größe des Riemens (2) repräsentiert.

9. Riemen (2) nach einem der vorhergehenden Ansprüche, **dadurch gekennzeichnet, dass** die Detektorvorrichtung (6) batteriefrei und/oder berührungslos ausgebildet ist.

10. Riemen (2) nach einem der vorhergehenden Ansprüche, **dadurch gekennzeichnet, dass** die Detektorvorrichtung (6) als eine gedruckte Detektorvorrichtung (6) ausgebildet ist.

11. Riemen (2) nach einem der vorhergehenden Ansprüche, **dadurch gekennzeichnet, dass** die Detektorvorrichtung (6) als ein integrierte Schaltung, insbesondere eine gedruckte integrierte Schaltung, ausgebildet ist.

12. System (24), aufweisend:
einen Riementrieb (26) mit einem Riemen (2) nach einem der vorhergehenden Ansprüche, und
eine Auswertevorrichtung (28) mit einer Transmittereinheit (30),
wobei die Transmittereinheit (30) zum Empfang des Detektorsignals ausgebildet ist, das zumindest die erfasste Dehnung des Riemens (2) repräsentiert, und
wobei die Auswertevorrichtung zur Ermittlung einer Dehnungsgröße basierend auf dem Detektorsignal ausgebildet ist, wobei die Dehnungsgröße eine absolute oder relative Dehnung des Riemens (2) repräsentiert.

13. System (24) nach dem vorhergehenden Anspruch, **dadurch gekennzeichnet, dass** der Riemen (2) von mehreren Rollen des Riementriebs (26) derart umgelenkt ist, dass der Riemen (2) einen Zugtrum (36) aufweist, wobei die Transmittereinheit (30) berührungsfrei an dem Zugtrum (36) des Riemens (2) angeordnet ist.

14. System (24) nach einem der vorhergehenden Ansprüche 12 bis 13, **dadurch gekennzeichnet, dass** die Auswertevorrichtung ausgebildet ist, die Dehnungsgröße basierend auf der von dem Detektorsignal repräsentierten Dehnung und auf der von dem Detektorsignal repräsentierten Temperatur zu ermitteln.

15. System (24) nach einem der vorhergehenden Ansprüche 12 bis 14, **dadurch gekennzeichnet, dass** die Transmittereinheit (30) zum Erzeugen und Aussenden des Energiesignals ausgebildet ist.
